# EUROPEAN PATENT SPECIFICATION

(11) **EP 1 278 419 B1**
(45) Date of publication and mention of the grant of the patent: **03.05.2006**
(21) Application number: 00976464.8
(22) Date of filing: 08.11.2000
(51) Int. Cl.: A01N 45/00, C05G 3/00, C05F 11/10

(54) **PLANT GROWTH ACTIVATOR**
PFLANZENWACHSTUMSFÖRDERER
ACTIVATEUR DE LA CROISSANCE DE PLANTES

(30) Priority: 21.04.2000 RU 2000109722
(43) Date of publication of application: 29.01.2003
(73) Proprietor: Soil Biogenics LTD., Hamilton HM12 (BM)
(72) Inventor: VINAROV, Alexandr, Moscow, 103104 (RU); SEMENTSOV, Alexei, Kimry, Tverskaya obl., 177510 (RU); IPATOVA, Tatiyana, Moscow, 109380 (RU); PANCHENKO, Oleg, Moscow, 121471 (RU); BURMISTROV, Boris, Moscow, 115598 (RU)
(74) Representative: Benatov, Emil Gabriel
(86) International application number: PCT/RU2000/000443
(87) International publication number: WO 2001/080647

(56) References cited:
- DD-A- 217 410
- RU-C1- 2 093 570
- RU-C1- 2 098 961
- RU-C1- 2 099 948
- RU-C1- 2 142 231
- DATABASE WPI Section Ch, Week 198716 Derwent Publications Ltd., London, GB; Class C03, AN 1987-114909 XP002275320 -& SU 1 253 973 A (AS SIBE IRKUT ORG CHEM) 30 August 1986 (1986-08-30)

## Description

The present invention relates to the field of plant cultivation, in particular, for root and/or off-root feeding of plants, and can be used for the cultivation of fruits, berries and vegetables, as well as in decorative and window gardening and in the treatment of seeds and cuttings of the said plants during the preparation for planting.

The recent plant cultivation tendency is acceleration of plant growth and increasing yield.

Natural soils used for plant cultivation are quite exhausted. Moreover, depending on the type of cultivation area the soil can be depleted of micro- and macroelements that are necessary for normal plant growth.

Because plant modification by means of genetic transformation may not satisfy the consumers and is unpredictable with respect to the consequences of using such plants in food, the said plant growth and growth acceleration strategy is based on the use of micro- and macroelements, fertilizers and natural plant hormones.

Organic and mineral fertilizers have been widely used in plant cultivation since long ago. However, the use of these fertilizers alone no longer satisfies the demand of the consumers.

The addition of macro- and microelements to the fertilizers (aluminum, iron, copper, zinc, molybdenum, cobalt, nickel, iodine, selenium, bromine, fluorine, arsenic and boron) affects the growth of plants, but the effect of a particular element can be amplified by using not only one or more additional element of the foregoing ones, but also other biogenic elements.

Such biogenic elements can be plant growth hormones. The most available hormones are derivatives of gibberellic acid, primarily its salts.

Complex compounds that are most widely used for improving the growth and growth of the plants are those that contain nitrogen, phosphorus and potassium sources, as well as macro- and microelements (The Big Encyclopedic Dictionary on Chemistry, Moscow, The Big Russian Encyclopedia Publishing, 1988, p. 603).

For example, known is a fertilizing composition for plant growth acceleration (SU Inventor's Certificate 1794939, C 05 F 11/02, 1993) that contains peat, microbiological waste, a phosphorus-containing component, a potassium-containing component and water-soluble compounds of boron, molybdenum, manganese, copper and cobalt.

Known also is a soil microflora activator (RU Patent 2108999 C 02 F 11/08, 1998) that contains a composition of lactate thermophilic bacteria, organic compounds and macro- and microelements.

Disadvantages of the said compositions are their low efficiency when used jointly with nitrogen, potassium and phosphorus containing fertilizers in plant feeding and seed treatment.

RU2142231 C1 describes a plant growth stimulant which increases the vegetative mass of green crops that comprises an alkaline salt of gibberellic acid and a filler. The filler contains beside sources of nitrogen, phosphorus and potassium trace elements like molybdenum (0.006-0.01 weight-%) and boron (0.005-0.015 weight-%).
RU2099948 C1 and RU2098961 C1 describe the use of sodium salts of gibberellins for increasing the growth and development of oil bearing plants and the control the growth control of wheat respectively.
RU2093570 C1 discloses that a mixture of such salts of gibberellins with the N-tris-hydroxyethyl ammonium salt of parachlorphenylthioacetic acid is a growth stimulator which increases the yield in microorganism biomass production.
SU1253973 A1 discloses that hydroxyalkylammonium salts of para-substituted phenylthio- or phenylsulphonyl-acetic acid are stimulants for barley malt production which increase yield and reduce germination time.
DD217410 A1 teaches that certain esters of auxin type compounds, like e.g. phenoxyacetic acids, in combination with gibberellins increase the salt tolerance, blooming and fruit setting of plants.

The technical problem solved by the present invention is the development of a composition that allows the growth of plants to be improved.

The technical result of the invention is a reduction in the time required for seed germination, acceleration of plant growth and fruit growth and increasing the yield and disease resistance of plants.

The said technical result is achieved by using a plant growth activator that contains water-soluble salts of molybdenum and boron, the sodium salt of gibberellic acid, N-(dimethyl-2-hydroxyethyl) ammonium parachlorphenylthioacetic and a filling agent in the following weight ratios, mass.%:

| | |
|---|---|
| Water-soluble molybdenum salt (relative to molybdenum) | 10-50 |
| Water-soluble boron salt (relative to boron) | 10-40 |
| N-(dimethyl-2-hydroxyethyl) ammonium salt of parachlorphenylthioacetic acid | 0.1-1.0 |
| Sodium salt of gibberellic acid | 0.01-0.1 |
| Filler | Balance |

The filler may be nitrogen and/or phosphorus and/or potassium sources. Moreover, the activator may additionally contain N-tris-(2-hydroxyethyl) ammonium salt of orthochlorphenyloxyacetic and/or N-tris-(2-hydroxyethyl) ammonium salt of orthochlorphenylsulfoacetic and/or dimethylethanolammonium salt of parachlorphenylthioacetic, the total amount of ammonium salt of phenylacetic acid being within 0.1-1.0 wt.%.

The activator composition was chosen on the basis of the experimentally proven stimulation of plant growth, acceleration of seed germination and increase in plant productivity due to the use of ammonium salt of phenylacetic acid and sodium salt of gibberellic acid combined with complete mineral component diet of the plants. However, the experiments have shown that the combined action of the said ammonium salts of phenylacetic acid and sodium salts of gibberellic acids is insufficient for achieving the said technical result. It appeared that the said result can be achieved by adding water-soluble salts of boron and molybdenum into the activator. The ratios of the activator ingredients were chosen experimentally.

The activator is produced by mixing preliminarily fine-powdered ingredients.

The present invention will be illustrated below using the following examples.

### Example 1 (reference).

Lawn grass seeds were placed onto a gauze cloth in a Petri dish. The seeds were spread over the cloth uniformly and wrapped into the said cloth. Each Petri dish contained 20 seeds. The seeds were wetted with a solution of a mineral fertilizer in tap water, the said solution containing 0.1 % ammonium nitrate and 0.06% potassium dihydrophosphate. The dishes were covered not tightly and the lawn grass seeds were grown for 10 days at room temperature. The number of come-up seeds was on average 10 seeds per dish on the 9^{th} day and 19 seeds per dish on the 10^{th} day.

### Example 2.

An activator was prepared that contained a water-soluble molybdenum salt (sodium modybdate) containing 23 wt.% of pure molybdenum, a water-soluble boron salt (sodium tetraborate) containing 32 wt.% of pure boron, N-(dimethyl2-hydroxyethyl) ammonium parachlorphenylthioacetic acid in an amount of 0.4 wt.%, sodium gibberellic acid in an amount of 0.05 wt.% and potassium dihydrophosphate to add to 100 wt.%.

The activator obtained in this way was used for growing the lawn grass seeds under the conditions similar to those in Example 1. The seeds were wetted in a 0.01% solution of the activator obtained as described above. In 5 days the average number of grown seeds was 10 per dish and in 7 days 20 per dish. Thus, the seed growth acceleration was about 30-44%.

### Example 3 (reference).

Lawn grass seeds were grown in 15 cm high 100 sq.cm pots filled with a soil produced by mixing rinsed sand, clay and peat in the 1:1:1 ratio. The number of seeds per pot was 50 in each case. The lawn grass was grown during 1 month in greenhouses. The plants were watered once in two days with settled tap water and once in five days with a mineral fertilizer solution that contained, wt.%:

| | |
|---|---|
| Ammonium nitrate | 0.1 |
| Potassium dihydroorthophosphate | 0.06 |
| Magnesium sulfate | 0.01 |
| Iron (II) sulfate | 0.002 |
| Zinc sulfate | 0.0005 |
| Manganese sulfate | 0.0003 |
| Copper sulfate | 0.00001 |

In 1 month the grass was cut to roots and the biomass obtained was weighed. The average green mass per pot was 12.0 g.

### Example 4 (reference).

*Belyi Naliv* cv. tomatoes were grown in greenhouses on soil fertilized with biocompost of the composition as shown in Table 1. The fertilizer was added in a ratio of 0.6 kg/sq.m. The most developed five shoots were chosen for further growing. The productivity was estimated as the average weight of fruits obtained from one plant during the first 7 days as from the first mature tomato was obtained This parameter was 0.83 kg.

**Table 1.**

| Parameter | Unit | Quantity |
|---|---|---|
| Humidity | wt.% to ADS | 50.01 |
| Total nitrogen | wt.% to ADS | 3.30 |
| Ammonium nitrogen | wt.% to ADS | 0.43 |
| Phosphorus total (P₂O₅) | wt.% to ADS | 0.92 |
| Potassium total (K₂O) | wt.% to ADS | 1.40 |
| Carbon total | wt.% to ADS | 38.20 |
| Organic compounds | wt.% to ADS | 65.8 |
| Humic acids | wt.% to ADS | 14.90 |
| Molybdenum | wt.% to ADS | 0.001 |
| Boron | wt.% to ADS | 0.006 |

| | | |
|---|---|---|
| ADS is absolutely dry substance. | | |

### Example 5.

An activator was prepared that contained a water-soluble molybdenum salt (sodium modybdate) containing 19 wt.% of pure molybdenum, a water-soluble boron salt (sodium tetraborate) containing 37 wt.% of pure boron, N-(dimethyl-2-hydroxyethyl) ammonium salt of parachlorphenylthioacetic acid in an amount of 0.1 wt.%, N-tris-(2-hydroxyethyl) ammonim salt of orthochlorphenyloxyacetic acid in an amount of 0.3 wt.%, sodium salt of gibberellic acid in an amount of 0.05 wt.% and triple-substituted ammonium orthophosphate to add to 100 wt.%.

*Belyi Naliv* cv. tomatoes were grown similarly to Example 5. However, at the stage of seed germination the soil was watered once in 3 days with a 0.0001% solution of the activator, and during the blooming and fruiting the plants were watered once in 12 days with a 0.00001% solution of the activator. The productivity was 1.1 kg, hence the activator efficiency is 32.5%.

### Example 6.

Young marigolds (Tagetos) were grown in the open soil of a garden. Shoots of nearly the same size with roughly similar root volumes were chosen for growing. The shoots were planted simultaneously into one bed in one row in the southern side of the garden. The bed was fertilized uniformly with an organic fertilizer in a ratio of 0.2 kg/sq.m and watered with 1 bucket of water per one bed. The shoots were planted into holes at a distance of 25 cm between each other. The shoots were divided into two groups by 6 species. In the bed the groups were separated from one another with a concrete screen to avoid mixing of water intended for different groups. No additional fertilizers were introduced during the growth The reference group was watered with usual water. The test group was watered with similar water, but twice a week in the penod of its intense growth until blooming the water was fertilized with a solution of an activator obtained similarly to Example 2 to make its concentration in the water 0.01%.

Comparison of the 14 day growth of the plants is given in Table 2.

**Table 2.**

| Parameter | Reference | Test |
|---|---|---|
| Total number of plants | 6 | 6 |
| Number of buds per plant | 4 with 2 buds | 2 with 2 buds |
| | 1 with 3 buds | 2 with 3 buds |
| | 1 with 4 buds | 2 with 4 buds |
| Minimum plant height, cm | 12 | 16 |
| Maximum plant height, cm | 17 | 24 |

Thus, the efficiency of this activator is about 25-30%.

The examples presented here confirm the efficiency of the activator in plant cultivation.

## Claims

1. Plant growth activator that contains organic compounds and microelements and is **characterized in that** it additionally contains a filling agent, the microelements being water-soluble salts of molybdenum and boron and the organic compounds being sodium salt of gibberellic acid and N-(dimethyl-2-hydroxyethyl) ammonium salt of parachlorphenylthioacetic acid in the following weight ratio, wt.%:
| | |
|---|---|
| Water-soluble molybdenum salt (pure molybdenum content) | 10-50 |
| Water-soluble boron salt (pure boron content) | 10-40 |
| N-(dimethyl-2-hydroxyethyl) ammonium salt of parachlorphenylthioacetic acid | 0.1-1.0 |
| Sodium salt of gibberellic acid | 0.01-0.1 |
| Filler | Balance |

2. Activator according to Claim 1 **characterized in that** sources of nitrogen and/or phosphorus and/or potassium are used as a filling agent.

3. Activator according to Claim 1 **characterized in that** it contains additionally N-tris-(2-hydroxyethyl) ammonium salt of orthochlorphenyloxyacetic acid and/or N-tris-(2-hydroxyethyl) ammonium salt of orthochlorphenylsulfoacetic acid and/or dimethylethanolammonium salt of parachlorphenylthioacetic acid, the total amount of ammonium salt of phenylacetic acids being within 0.1-1.0 wt.%.

## Patentansprüche

1. Pflanzenwuchsstoff, enthaltend organische Verbindungen und Spurenelemente, **dadurch gekennzichnet, dass** er zusätzlich ein Füllmittel enthält, und dass es sich bei den Spurenelementen um waserlösliche Molybdän- und Borsalze und bei den organischen Verbindungen um das Natriumsalz der Gibberelinsäure und das N-(dimethyl-2-hydroxyethyl)ammoniumsalz der Parachlorphenylthioessigsäure handelt, wobei die Bestandteile im folgenden Massenverhältnis vorliegen (Gew.-%):
| | |
|---|---|
| Waserlösliches Molybdänsalz (bezogen auf reines Molybdängehalt) | 10 bis 50 |
| Waserlösliches Borsalz (bezogen auf reines Borgehalt) | 10 bis 40 |
| N-(Dimethyl-2-hydroxyethyl)ammoniumsalz der Parachlorphenylthioessigsäure | 0,1 bis 1,0 |
| Natriumsalz der Gibberelinsäure | 0,01 bis 0,1 |
| Füllmittel | Rest |

2. Pflanzenwuchsstoff nach Anspruch 1, **dadurch gekennzichnet, dass** es sich bei dem Füllmittel um Sickstoff- und/oder Phosphor- und/oder Kaliumquellen handelt.

3. Pflanzenwuchsstoff nach Anspruch 1, **dadurch gekennzichnet, dass** er zusätzlich N-Tris-(2-hydroxyethyl)ammoniumsalz der Orthochlorphenyloxyessigsäure und/oder N-Tris-(2-hydroxyethyl)ammoniumsalz der Orthochlorphenylsulphoessigsäure und/oder Dimethylethanolammoniumsalz der Parachlorphenylthioessigsäure enthält, wobei die Gesamtmenge an Ammoniumsalzen der Phenylessigsäuren zwischen 0,1 und 1,0 Gew.-% liegt.

## Revendications

1. Activateur de croissance des plantes comportant des composés organiques et des micro-éléments, **caractérisé en ce qu'**il comporte en addition un agent de remplissage, comme micro-éléments il comporte des sels hydrosolubles de molybdène et de bore, comme composés organiques il comporte le sel de sodium de l'acide gibbérellique et le sel N-(diméthyl-2-hydroxéthyl) ammonique de l'acide parachlorphénylthioacétique en proportion suivante (masse %) :
- sel hydrosoluble de molybdène (teneur en molybdène) 10-50
- sel hydrosoluble de bore (teneur en bore) 10-40
- sel N-(diméthyl-2-hydroxéthyl)ammonique de l'acide parachlorphénylthioacétique 0,1-1,0
- sel de sodium de l'acide gibbérellique 0,01 - 0,1
- agent de remplissage le reste

2. Activateur selon la revendication 1, **caractérisé en ce que** comme agent de remplissage sont utilisées des sources d'azote, et/ou de phosphore et/ou de potassium.

3. Activateur selon la revendication 1, **caractérisé en ce qu'**il comporte en addition le sel N-tris-(2-hydroxéthyl)ammonique de l'acide orthochlorphényloxyacétique et/ou le sel N-tris-(2-hydroxéthyl)ammonique de l'acide orthochlorphénylsulfoacétique et/ou le sel diméthyléthanolammonique de l'acide parachlorphénylthioacétique, la quantité totale de sels d'ammonium des acides phénylacéthiques ne dépassant pas 0,1-1,0 masse %.
